# EUROPEAN PATENT SPECIFICATION

(11) **EP 3 454 527 B1**
(45) Date of publication and mention of the grant of the patent: **15.04.2020**
(21) Application number: 17189704.4
(22) Date of filing: 06.09.2017
(51) Int. Cl.: H04L 29/08

(54) **METHOD AND SYSTEM FOR MANAGING INFORMATION STORAGE IN A DTN-BASED COMMUNICATION SYSTEM**
VERFAHREN UND SYSTEM ZUR VERWALTUNG EINES INFORMATIONSSPEICHERS IN EINEM DTN-BASIERTEN KOMMUNIKATIONSSYSTEM
PROCÉDÉ ET SYSTÈME DE GESTION DE STOCKAGE D'INFORMATIONS DANS UN SYSTÈME DE COMMUNICATION À BASE DE DTN

(43) Date of publication of application: 13.03.2019
(73) Proprietor: Thales Nederland B.V., 7550 GD Hengelo (NL)
(72) Inventor: HOEKSTRA, Gerard, 3825 XM Amersfoort (NL); VAN DER LINDEN, Alex, 2516 XN Den Haag (NL); LEMEE, Yves, 5653 LT Eindhoven (NL)
(74) Representative: Hnich-Gasri, Naïma

(56) References cited:
- US-A1- 2009 129 316
- US-A1- 2009 196 170
- US-A1- 2017 164 266

## Description

### BACKGROUND

The invention generally relates to computer networking, and more particularly to methods, systems, and computer program products for managing information storage in a DTN-based communication system (DTN stands for Disruption Tolerant Networking).

DTN-based communication networks require a storage capacity. In a DTN-based communication system, the traffic from data streams needs to be temporarily stored and forwarded until the destination is reached. In a DTN-based communication system, bundles are passed through the network according to a routing algorithm.

In a conventional DTN-based communication system, the traffic is:
- stored at each node upon reception of the traffic from one or more data streams, and
- forwarded to another node that is supporting the DTN capability until forwarding conditions are satisfied.

When DTN nodes encounter one another, the stored traffic of data streams is exchanged in an attempt to deliver the information stored to a destination DTN node. The stored traffic further remains in the DTN nodes until it has been delivered at the destination nodes.

When storing traffic from data streams, the traffic is stored until it can be transmitted to another DTN node. As a result, when DTN nodes have finite storage space, it may occur that there is no storage space left in a DTN node. It should be noted that that finite storage is not the only factor that may cause data to be removed or refused. Network capacity may be another important factor. A DTN node may decide to refuse or remove data when the network capacity is low or getting low to make room for other data (more important or equally important). For example, if a user needs to receive very important positioning information and at the same time needs to send a message, which is of equal importance, while the positioning information is cloaking up the network, this could result in the message not to be received on time.

In this way, messages can be lost or significantly delayed because the network may be flooded. In such situation, limited network capacity may cause some information to be lost, even in the case infinite storage is available. Consequently, upon arrival of new traffic, other traffic may need to be removed or the newly arrived traffic may be refused. In some approaches, significant information may be lost. Document US 2009/0129316 A1 discloses systems and methods for adaptive routing processes for packet-based wireless communication networks.

Thus, improved systems, methods, and computer program products for managing storage at DTN nodes are needed.

### SUMMARY

There is provided a node in a DTN-based communication system, the node being configured to store incoming messages in a main storage unit in the form of objects and forward messages from the main storage unit to other nodes of the network depending on forwarding conditions, one or more portions of the message being marked with a set of priority tags of given types, each tag being assigned a value. The node may comprise a storage manager for managing the storage of messages in the main storage unit, the storage manager being configured to sort the main storage unit according to a main ordering rule being related to at least one priority tag. The node further may comprise an auxiliary storage unit comprising at least one auxiliary data structure, each data structure storing a logical reference to each object of the main storage unit, the auxiliary storage unit being further configured to sort each auxiliary data structure according to at least one auxiliary ordering rule related to at least one priority tag.

In one embodiment, each object of the main storage unit may further store a logical reference to each element of the data structure.

Each message may comprise a header and a payload, the header of the message comprising the set of priority tags, each priority tag being associated with a portion of data comprised in the payload.

The priority tags may be chosen in a group consisting of:
- a first prioritization tag representing the priority in which an information portion of a message marked with the first prioritization tag is to be transmitted, and
- a second prioritization tag representing the priority in which an information portion of a message marked with the first prioritization tag should be retained.

The node may comprise a bundle handling unit configured to extract the priority tags from each incoming message.

In some embodiments, the main ordering rule may be defined from at least one of the priority tags associated with one or more data portions of each message.

The main storage unit may comprise at least one storage queue, the storage manager comprising an auxiliary storage manager configured to maintain a set of logical references to elements of the at least one storage queue using the set of data structures, each entry of a data structure comprising a logical reference to an object of a storage queue, the entries in each storage queue referring to the logical references used in the auxiliary data structures.

In one embodiment, the size of the at least one storage queue may be fixed or changed dynamically.

In one embodiment, the auxiliary storage manager may be further configured to sort each auxiliary data structure based on the at least one auxiliary ordering rule.

In some embodiments, the auxiliary storage manager may be configured to sort the logical references in a j - th data structure among the data structures by decreasing value of the i - th priority tag associated with the objects of the at least one storage queue, the number i representing the index of a given priority tag in the j - th data structure and depending on the number j representing the index of the data structure.

In one embodiment, the number i used to represent the index of a given priority tag in the j - th data structure may be equal to the reference number j representing the index of the data structure.

In some embodiments, in response to a change made to a storage queue, the auxiliary manager may be configured to dynamically update the logical references in the data structures.

In one embodiment, in response to a request for deletion of an object in a storage queue, the auxiliary manager may be configured to look up each logical reference associated with the object in the auxiliary storage, to purge each found logical reference from the auxiliary storage and to purge the object from the storage queue.

In one embodiment, in response to a request for insertion of an object in a storage queue, the auxiliary manager may be configured to insert the object in the storage queue, and to add at least one pointer from logical references in the auxiliary storage unit to the object.

In particular, the at least one auxiliary ordering rules may be different from one another and from the main ordering rule applied to the main storage unit.

There is further provided a method of managing a node in a DTN-based communication system, the node being configured to store incoming messages in a main storage unit in the form of objects and forward messages from the main storage unit to other nodes of the network depending on forwarding conditions, one or more portions of the message being marked with a set of priority tags of given types, each tag being assigned a value, the method comprising managing the storage of messages in the main storage unit, by sorting the main storage unit according to a main ordering rule being related to at least one priority tag, the node further comprising an auxiliary storage unit comprising at least one auxiliary data structure, each data structure storing a logical reference to each object of the main storage unit, the method further comprising sorting each auxiliary data structure according to at least one auxiliary ordering rule related to at least one priority tag.

The node and the method according to the various embodiments of the invention make it possible to simultaneously and transparently take into account multi-dimensional criteria to apply differentiated treatment of traffic.

Further advantages of the present invention will become clear to the skilled person upon examination of the drawings and detailed description. It is intended that any additional advantages be incorporated herein.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
Figure 1 is a schematic representation of an exemplary DTN-based communication system according to certain embodiments;
Figure 2 is a block diagram of a delay/disruption-tolerant network according to an embodiment;
Figure 3 is a schematic representation of a marked message according to certain embodiments;
Figure 4 is a block diagram of a node according to certain embodiments;
Figure 5 is a flowchart depicting the process of managing the storage queue at a node, according to certain embodiments;
Figure 6 shows an exemplary implementation of the invention, according to certain embodiments; and
Figure 7 represents an exemplary architecture of a node 100 implemented in the form of a computer device.

### DETAILED DESCRIPTION

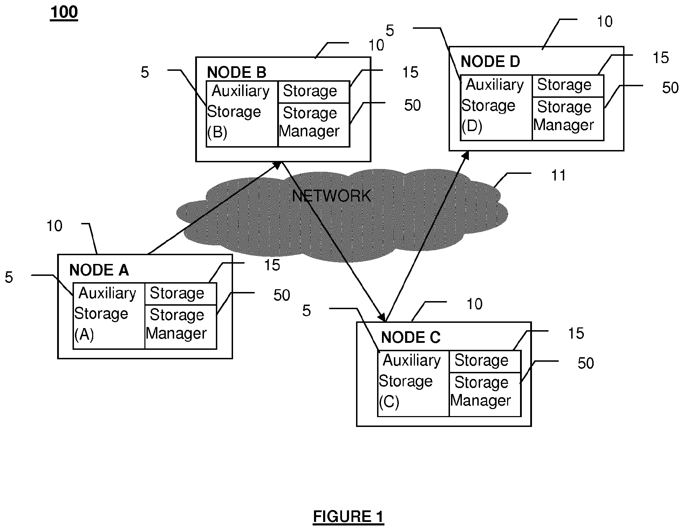

Referring to Figure 1, there is shown an exemplary DTN-based communication system 100 in which embodiments of the invention can be implemented.

In a DTN-based architecture, data is conveyed in bundles. Bundles travel from a DTN source to a DTN destination. Protocol layers below the bundle protocol may transport bundles eventually by packets. The architecture for a Delay and Disruption Tolerant interoperable Networking (DTN) is described in Internet Research Task Force Request for Comments (IETF RFC 4838).

A DTN-based communication system 100 comprises a plurality of communication nodes 10 interconnected by zero or more communication links through a communication network such as for example a wireless communication network. The interconnectivity may vary between zero communication links for N nodes and each node having (N-1) connections to others.

A source data bundle (also referred to hereinafter as a data stream or message) may be sent from a source node A to a destination node D among the nodes 10. A node 10 may be interconnected to zero or more nodes in the network. Further, the links between the nodes may change over the time depending on various conditions such as environmental and/or radio frequency conditions.

Each node 10 in the communication system 100 may receive a data bundle from an interconnected node. In response to the reception of a data bundle, the receiving node may store the bundle in a storage queue according to a storage method until forwarding conditions are satisfied, and then may transmit the data to another node using a forwarding method according to certain embodiments of the invention. The forwarding method may be applied depending on forwarding conditions which may include, without limitation, conditions related to the delay, to the remaining lifetime, to the retention priority of the bundle, to bandwidth, to the links in the network, availability conditions, etc.

Each node 10 may comprise a storage unit 15, such as a repository, for storing the information received from the other nodes until forwarding conditions are satisfied. According to embodiments of the invention, each node may further comprise a storage manager 50 for managing the information of the storage unit 15. The storage manager 50 may be configured to order the storage unit 15 according to a main ordering rule which is related to a set of tags inserted in each element stored in the storage unit 15. The main ordering rules may relate to the DTN bundles. The storage manager 50 may be further configured to manage the storage unit 15 using an auxiliary storage 5 comprising a set of auxiliary data structures. Each auxiliary data structure 5 may comprise elements, each element in the auxiliary data structure 5 forming a logical reference to an element of the main storage unit 15. Further, the elements of each data structure may be ordered according to a different ordering rule related to the set of tags inserted in each element stored in the storage unit 15, the ordering rules differing from one auxiliary data structure to another and from the main ordering rule.

Each node 10 may further comprise a processor (any suitable Central Processing Unit, CPU, microcontroller, Digital Signal Processor, DSP, etc. capable of executing a computer program comprising computer program code) and may be of any type of node configured to receive or transmit information through the network 11, such as a mobile communication terminal, a user terminal or a mobile, a smart phone, mobile telephone or a cellular phone, laptop computer, tablet computer or the like.

The DTN architecture of the system 100 relies on a store and forward protocol. In such as DTN architecture, data are packed into bundles. Such DTN architecture is particularly adapted for communications in environments causing long delays or unstable connections, such as in a space environment.

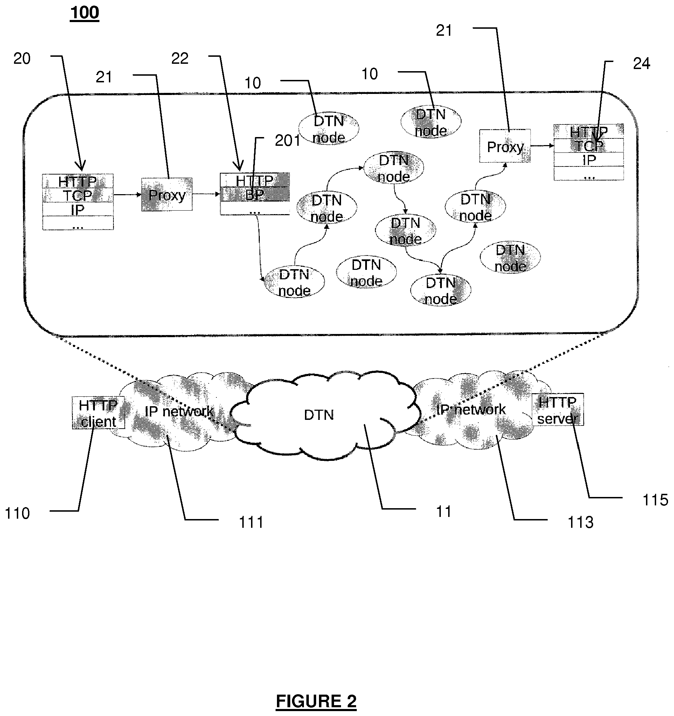

Figure 2 shows an exemplary implementation of a DTN-based communication network. The DTN-based communication system 100 allows for the transport of incoming messages over the DTN network. The DTN network may use UDP/TCP/IP for sending bundles. The DTN network may thus operate within an IP network. The DTN based communication system transports the incoming messages 20 (for example HTTP (transport of Hypertext Transport Protocol) messages or SMTP (Simple Mail Transfer Protocol) messages) between a source client 110 (e.g. HTTP client) and a destination server 115 (e.g. HTTP server). HTTP messages are encapsulated by a proxy 21 into DTN bundles. When an incoming message 20 reaches the DTN-based communication system 11 from a source network 111 (for example Internet Protocol network), the proxy 21 may be used to modify the received incoming messages for their transport over the DTN network by adding a Bundle Protocol (BP) header 201. The BP is described by the document Bundle Protocol Specification Internet Research Task Force Request for Comments (IETF RFC 5050). The modified incoming messages 22 are then transported over the DTN network 11, hopping from node to node (10) until they reach the destination server 115 (e.g. HTTP server). Before reaching the destination server 115, a proxy 21 removes the BP header from the received messages, and forwards the messages 24 to the server over the destination network which may be of a type compatible with the source network (e.g. Internet Protocol network). The messages from several senders may enter a node 10 directly from the sender 110 or via routing nodes. Further, the nodes 10 of the DTN network may be mobile or fixed.

Embodiments of the present invention provide a method and a system of marking a data stream to be transferred to a DTN destination node in a DTN-based communication system using a set of priority tags, for managing the storage of information received in a given node of the DTN-based communication system using auxiliary storage referring to the main storage 15 and of ordering of elements in each auxiliary storage based on ordering rules related to the priority tags.

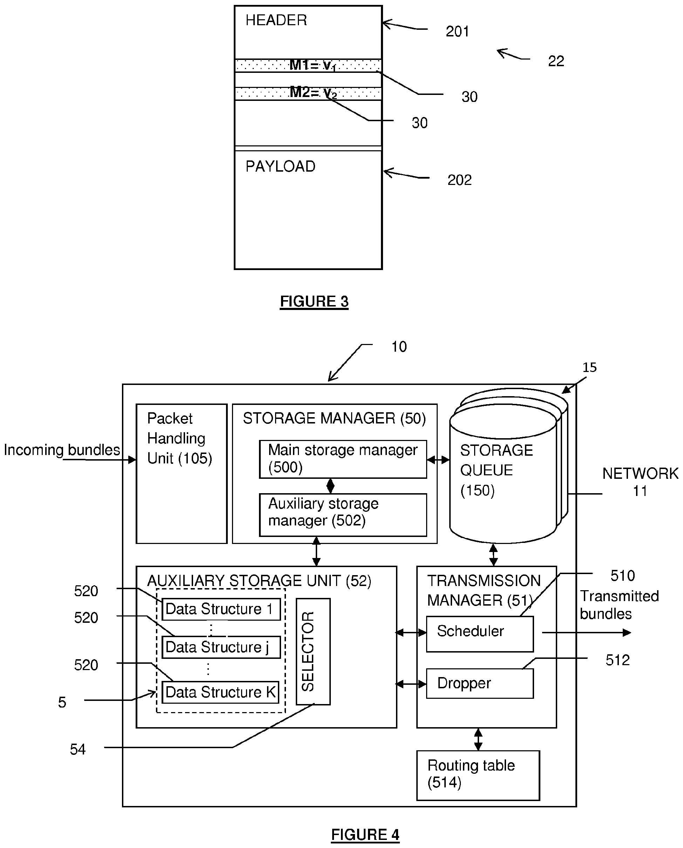

Figure 3 is a block diagram schematically representing a message 22 marked with priority tags according to certain embodiments of the invention.

Each message 22 comprises a header 201 and a payload 202. The header 201 (indicated in the context of RFC5050 as the primary bundle block) may include destination information data (destination node in the network), a BP header in a DTN application of the invention, a lifetime indicator having a given value, the expiry of the lifetime value indicating that the message is no more useful to the application and may be dropped from the storage 15. The lifetime of a bundle expires in the context of the BP specification document RFC5050 when the current time is greater than the bundle's creation time plus its lifetime as specified in the primary bundle block. The payload 202 (in the context of the BP specification document referred to as the payload bundle block) comprises the actual data of the message that are to be transmitted.

The header 201 of each message 22 may further comprise inter arrival time data indicating the time at which a message arrived at the node from a routing node. According to certain embodiments, each node may be configured to mark portions of a message 22 to be transmitted with a set of priority tags 30. Marking of a node may be done by the application layer or the proxy, before a DTN bundle is created.

According to certain embodiments, the header 201 may comprise a set of priority tags 30 of different types, each priority tag being assigned a value (e.g. the priority tag M1 is assigned a value "v₁") and each priority tag being associated with a portion of data comprised in the payload 202.

The priority marking may comprise for example:
- the first prioritization tag representing the priority in which an information portion of a message marked with the first prioritization tag should be transmitted (transmission priority), and
- a second prioritization tag representing the priority in which an information portion of a message marked with the first prioritization tag should be retained (retention priority).

As an example, the lifetime of a bundle may serve as prioritization tag.

It should be noted that the invention is not limited to two prioritization tags and encompasses marking of portions of each received information message with a plurality of priority tags, the node being configured to manage the messages received at the node based on a combination of tags to optimize the delivery of information.

For example, a first portion of the header 201 related to first message data of the payload 202 may be marked with a first priority tag M1 representing the transmission priority while a second portion of the header 201 related to second message data of the payload may be marked with a second priority tag M2 representing the retention priority. A bundle may thus be marked depending on priority criteria such as the importance of the data included in the bundle (transmission priority) or what data should be retained longer in the network (retention priority).

For instance, the first data portion of the payload 202 marked with the transmission priority M1 may represent a portion of information that is required to travel through the network fastly to a target destination, while the second data portion marked with the retention priority M2 may represent a portion of information that tolerate a longer time to reach its final destination and which is required to surely reach such destination. It should be noted that a transmission priority is distinct from a retention priority. In particular, a high transmission priority indicates a faster delivery requirement (while not indicating a high retention requirement). A high retention priority indicates a higher retention requirement and does not indicate that data are tolerant to have a longer delay.

The two markings M1 and M2 are thus independent from each other and may be sorted differently.

Figure 4 is a block diagram of a network node 10 according to certain embodiments. The node 10 may comprise a bundle handling unit 105 for receiving and processing incoming messages from other interconnected nodes. The bundle handling unit 105 may be also configured to extract priority tags from the received message.

Each node 10 also comprises a storage unit 15 for storing messages received from other nodes and/or messages generated locally by the node itself. The storage unit 15 may be a buffer or any repository. The storage unit 15 may be divided into one or more storage structures, such as storage queues 150, to store an incoming message. The following description of some embodiments of the invention will be made with reference to a storage unit 15 comprising storage structures represented by a set of storage queues 150 for illustration purpose only.

The size of each storage queue 150 may be fixed or changed dynamically depending on the traffic.

Each node may further comprise a storage manager 50 configured to manage the storage queues 150 and the elements contained in the data structures 1,...,K (520) of the auxiliary storage unit 5, the data structure 520 being linked to the elements of storage queues 150, through logical references.

The storage manager 50 may comprise a main storage manager 500 to manage the storage unit 15 and an auxiliary storage manager 502 to manage an auxiliary storage unit 52, the auxiliary storage unit 52 (also referred to herein as a "logical reference manager") comprising the auxiliary storage 5 which includes the set of data structures 520. The main storage manager 500 may sort out the messages by applying a main ordering rule defined from at least one of the priority tags inserted in data portions of each message, in response to an update of the storage queue.

Embodiments of the invention allow applying multiple sorting criteria at the same time in order to organize the storage queues 150, the criteria comprising a set of conditions related to multi-dimensional criteria. This enables sorting the storage queues 150 with respect to multiple prioritization criteria.

The priority tags may comprise at least the retention priority defining how long the data associated with the retention priority are to be retained in the network and the transmission priority representing the importance (i.e. priority) of the data associated with the transmission priority.

By marking the information messages according to multiple priority tags and sorting the storage queues 150 depending on the priority tags, the various embodiments of the invention enable efficient use of scarce resources while ensuring reliable delivery of information as soon as possible. It should be noted that DTN nodes may not always meet at planned instants.

In the short moment in which two nodes meet, re-sorting of the queues is very undesirable. By using multiple representations to the same storage queue, resorting is never needed, only when a bundle is added to the storage, the data structures are updated.

The auxiliary storage unit 52 may comprise a set of K data structures 520, each data structure storing one or more logical reference(s) to an element of a storage queue 150 (as used herein an "element" of a storage queue 150 refers to an element representing an information message received or generated at the node 10). Conversely, each element of a storage queue 150 may include logical references to the data structures 520. Each data structure 520 may be for example a list of logical references, each logical reference referring to an element contained in a storage queue 150.

The auxiliary storage manager 502 thus maintains a set of logical references to the storage queues 150 using the set of K data structures 520, each data structure 520 comprising one or more logical references corresponding to elements of the storage queues 150. Each element in a storage queue 150 may further have a reference to the corresponding references in each of the K data structures 520.

The auxiliary storage manager 502 may be configured to sort each auxiliary data structure 520 based on an auxiliary ordering rule, the auxiliary ordering rule being related to at least one of the priority tags inserted in data portions the message. The set of auxiliary ordering rules applied to sort each auxiliary data structure may be different from one another and from the main ordering rule applied to the storage queues 150.

The auxiliary storage unit 52 may further comprise a logical reference selector 54 for selecting a logical reference among the set of logical references associated with an element of a storage queue 150 in the auxiliary data structures, in response to an update of an element in a storage queue 150. Such selection may be based on the priority tags.

Each data structure 520 may be any type of data structure, each entry of the data structure comprising a logical reference 501 to an object (or "element") of a storage queue 150, such as for example an array or a linked list. In some embodiments, the data structures may be organized by groups of data structures, each group corresponding to only a part of the storage queue. The following description will be made with reference to a data structure of the type array for illustrative purpose only.

In certain embodiments, the K data structures 520 maintained by the auxiliary storage unit 52 may comprise K arrays comprising the logical references to the elements stored in a storage queue 150, while each element in a storage queue 150 comprises a number of n priority tags (also referred to as "priority tags") noted {M1,... ,Mn}. In such embodiments, the auxiliary storage unit 52 may be configured to sort each j - th array out of the K arrays by decreasing the value of the i - th priority tag Mi of the elements, the number i representing the index of a given priority tag Mi and depending on the number j used to index the array. For example, if the number of n priority tags is higher or equal to the number of arrays, K, the reference number i of the priority tag Mi used to order the logical references in the j - th array may be equal to the reference number j of the array, for each i - th value higher or equal to j.

The skilled person will readily understand that the invention is not limited to a particular relationship between the reference number i of the priority tag Mi used to order the logical references in the j - th array and the number of arrays, K, of the array.

Accordingly, all references are already sorted based on the most recent information received in the storage queue and are readily available when the storage queue 150 needs to be used.

Each node 10 may further comprise a transmission manager 51 configured to manage transmission of message. The transmission manager 51 may comprise a scheduler 510 for scheduling transmission messages using routing information that may be retrieved from a routing table 514. The transmission manager 51 may further comprise a dropper 512 for dropping messages. Messages may be scheduled for transmission, or remain queued, or may be removed. The transmission manager 51 may use an already sorted queue 150 of logical references based on a priority tag representing the transmission priority to schedule message transmission or drop messages. The first logical reference in a storage queue 150 may be for example a reference to a bundle having with the highest priority.

Further, in response to a change made to a storage queue 150, such as removal or addition of new elements, the logical references may be dynamically updated in the arrays 520.

Even if not limited to such application, the sorting method has particular advantages for an application of the invention to DTN nodes realized by resource-limited embedded systems such that a substantial amount of information may be stored in a DTN node. Resource limitations on embedded systems may be related to storage capacity, to the processing power and/or the transmission capacity of a node.

In such applications, embodiments of the invention provide for an efficient method to previously sort the information maintained in the storage in accordance to different priority criteria.

By organizing the ordering of the references in the arrays 520 differently from the ordering of the object in a storage queue 150, a sorted set of references that comply with a set of multiple different sorting criteria can be maintained in correspondence with the storage queue.

The messages may be marked previously by an application layer outside the DTN nodes. When a DTN bundle is created the priority tags may be set for this bundle until the bundle arrives at a destination node. Priority tags are thus inserted in the bundles before storage in a storage queue 150.

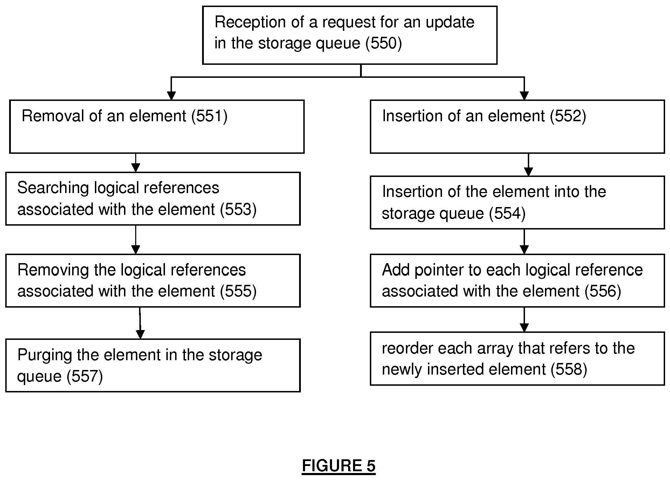

Figure 5 is a flowchart depicting the process of managing the storage queue 150 at a given DTN node 10, according to certain embodiments.

The process of managing a storage queue 150 may be based on a sorting method implemented by the storage manager 50 for simultaneously sorting the storage queue 150 and the auxiliary storage data structures 520, according to multidimensional sorting criteria.

The auxiliary storage unit 52 makes it possible to maintain a set of logical references to the storage queues 150, while ordering the logical references in the auxiliary data structure 520 depending on a different ordering criteria.

The process may start, in response to an addition or removal of information into/from the storage queues 150, in step 550 (for example arrival of a new message).

In response to a request for addition or removal of information into/from a storage queue 150, the storage queue 150 and at least some of the logical references maintained to the storage queue 150 may be updated according to different approaches. Such update may include a resorting of the references. However, as the elements in a storage queue 150 may be sorted by one parameter, such resorting is not necessarily implemented. It should be noted that resorting of the elements may require more processing as the number of elements in a storage queue 150 grows.

In some embodiments, if the update request is an update for deletion (block 551), the updating method may include looking up for each associated logical reference in the auxiliary storage unit 52 (in step 553) and purging the element associated with these logical references in the storage queues 150 (step 557). Each associated logical reference may be searched in the auxiliary storage unit. Alternatively, the information contained in the storage queues 150 may refer to logical references in the auxiliary storage unit 52 to avoid searching the associated logical references in the auxiliary storage unit 52 entirely. In such embodiment, the storage queues may thus maintain a reference to the logical elements stored in the auxiliary storage unit 52. Conversely, the auxiliary storage manager 502 may be configured to maintain a set of logical references to the storage queues 150.

For example, if the priority tags comprise a transmission and retention tags, it may happen that the last bundle to be retained is removed (last one in the retention array) or that the first one to be transmitted is removed. At any rate, before deleting a bundle, the references should be deleted first. In response to a request for removal of an element from a storage queue 150, the arrays 520 may thus be first updated prior to the removal of the information element from the storage queue 150. More specifically, after finding the logical references in step 553, the identified logical references may be purged first from all the arrays 520 in step 555. In step 557, the information element can be then removed from the storage queue 150.

For example, if an element j having a i - th priority tag Mi = v in the storage queue 150 is to be purged, the logical references to this element may be purged too from each of the j - th auxiliary arrays 520 with j > 1, causing elements having a i - th priority tag Mi = t with t > *v* to move one position closer to the head of array j.

If the update request is an update for insertion (552) of one or more new elements in a storage queue 150, the updating method may include inserting each new element in the storage queue 150. More specifically, for each element to be inserted in the storage queue 150, the element may be added to the storage queue in step 554, and a pointer to the element may be added to each logical reference in the auxiliary storage unit 52 and inserted at the appropriate place (i.e. the place matching the order of the priority marking) in step 556.

Accordingly, in response to a request for addition of an element in a storage queue 150 (for example an element x1), the new element x1 may be inserted in the storage queue 150 depending on the first ordering rule related to priority tags. For example, the new element x1 may be inserted behind the elements which have a priority tag value M11 that is lower than the value of the priority tag M1 of the new element x1, in the storage queue 150, if the main ordering rule defines an ordering of the elements of the storage queue 150 by decreasing value of the priority tags. If no such elements exist in the storage queue 150 (with M11 < *M*1), the new element x1 may be inserted at the head of the storage queue 150.

Accordingly, the insertion of the new element in a storage queue 150 in step 554 results in the creation of a new item in each array that refers to the newly added elements out of the K arrays 520.

In step 558, each array that refers to the newly added elements out of the *K* arrays 520 may be reordered depending of the auxiliary ordering rule associated with a certain array. For example, the j - th array may be sorted out of decreasing value of the i - th priority tag.

By maintaining several logical representations in the auxiliary arrays 520, several ordering rules depending on different parameters are satisfied simultaneously. The various embodiments of the invention thus allow sorting out a same repository comprising information elements marked with a set of priority tags using logical references organized in auxiliary data structure 520 which are ordered depending on different rules related to the priority tags. When bundles in a DTN application are sorted upon arrival, re-sorting of the storage queues is avoided, such as during the time window in which two DTN nodes would typically meet.

Instead of spending time on sorting known information in their own repositories, the DTN nodes can thus exchange new information. By using a set of logical representations linked to the information stored in the storage unit 15, the references can be manipulated without having to manipulate directly the repository elements.

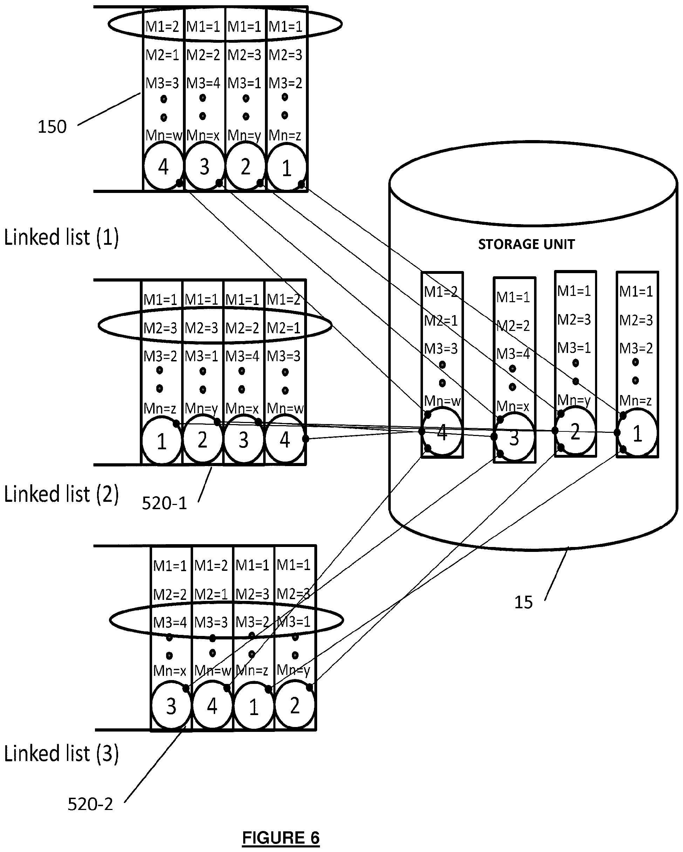

Figure 6 shows an exemplary implementation of the invention, according to an embodiment in which the storage unit 15 comprises one storage queue 150 and the data structures 520 comprise two auxiliary arrays 520-1 and 520-2.

In the example of figure 6, the storage queue 150 comprises four elements which are referenced respectively as elements 1, 2, 3, and 4, the elements corresponding to different information messages. Each element of the storage queue 150 comprises n marked portions {M1,...,Mn} at different data portions of the information message, each priority tag Mi being affected a particular value.

In the example of figure 6, the storage queue 150 has been sorted in accordance to decreasing values of priority tag M1, an element x of the storage queue further having precedence over an element y if the number reference associated with x is inferior to the number reference associated with y.

The two auxiliary data structures 520-1 and 520-2 are represented by linked lists.

Each auxiliary data structure 520-k (k = 1 or 2) is sorted by decreasing order of the values of the i - th priority tag Mi, with i = k + 1, an element x further having precedence over an element y if the number reference associated with x is inferior to the number reference associated with y. Thus, the first auxiliary data structure 520-1 is sorted by decreasing order of the values of priority tag M2 and the second auxiliary data structure 520-2 is sorted by decreasing order of the values of priority tag M3.

By maintaining logical references in a data structure associated with a storage queue 150, the logical references being ordered according to a different order than the elements stored in the storage queue 150, duplication of elements in a storage queue is prevented and only the original elements are maintained in the storage queue 15.

Accordingly, the performances of the DTN nodes in exchanging the most valuable information at the transmission opportunities are improved.

The present invention provides a number of advantages when applied to a DTN network, which include without limitation:
- A differentiated treatment can be achieved in accordance to multi-dimensional priority criteria. For instance, DTN nodes may prune or read traffic from their storage using different criteria, without having to sort the storage.
- A differentiated treatment can be achieved with modest resources requirements on computing and information platforms.
- DTN nodes can deliver higher performance because multiple decision criteria can be accounted for in a more responsive way.
- Information may be transferred through a DTN network more reliably with less delay.

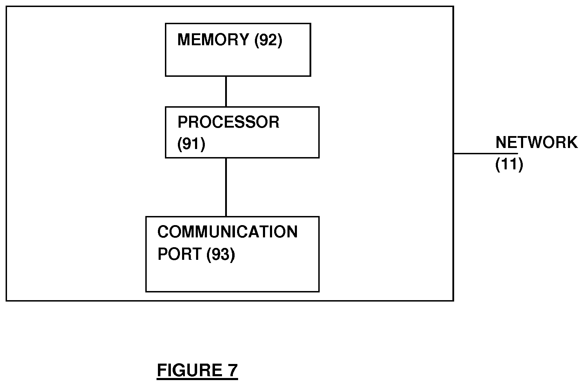

Figure 7 represents an exemplary architecture of a node 100 implemented in the form of a computer device. The node 10 comprises a processor 91, a memory 92, and a communication port 93 for sending messages towards interconnected nodes and for receiving message from other interconnected nodes. The memory 92 may comprise the storage queues 150 as part of a buffer and the auxiliary storage 52.

The processor 91 may be configured to process each received message according to the methods described above and to instruct the communication port 93 to forward the message towards a selected node.

The node 10 may further comprise other elements depending on the application (not represented).

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. In particular, the invention may be applied to any type of DTN-based communication system maintaining queued information elements. Further, the invention is not limited to a particular number or a particular type of priority tags and applies to a wide range of priority tag types (lifetime priority tags, etc.). Similarly, the invention is not limited to particular type of data structure for maintaining the logical references to the elements of the storage queues 150. Also, the invention is not limited to ordering rules depending on a unique priority tag for sorting the auxiliary arrays 52. For example, each ordering rule used to sort out a given auxiliary array may depend on a combination of one or more priority tags. In still another exemplary embodiment, the ordering rule used to sort out the *i* - *th* auxiliary array may depend on the reference number of the priority tag used to sort out the previous auxiliary array (*i* - 1) - *th.*

In addition, program code described herein may be identified based upon the application or software component within which the program code is implemented in a specific embodiment of the invention. It should be further appreciated that the various features, applications, and devices disclosed herein may also be used alone or in any combination.

## Claims

1. A node in a DTN-based communication system, said node being configured to store incoming messages in a main storage unit (15) in the form of objects and forward messages from the main storage unit (15) to other nodes of the network depending on forwarding conditions, one or more portions of the message being marked with a set of priority tags of given types, each tag being assigned a value, the node comprising a storage manager (50) for managing the storage of messages in said main storage unit (15), the storage manager being configured to sort the main storage unit (15) according to a main ordering rule being related to at least one priority tag, wherein the node further comprises an auxiliary storage unit (52) comprising at least one auxiliary data structure (520), each data structure storing a logical reference to each object of the main storage unit (15), the auxiliary storage unit (52) being further configured to sort each auxiliary data structure according to at least one auxiliary ordering rule related to at least one priority tag.

2. The node of claim 1, wherein each object of the main storage unit (15) further stores a logical reference to each element of the data structure.

3. The node of any preceding claim, wherein each message (22) comprises a header (201) and a payload (202), the header (201) of the message comprising said set of priority tags (30), each priority tag being associated with a portion of data comprised in the payload (202).

4. The node of any preceding claim, wherein the priority tags may be chosen in a group consisting of:
- a first prioritization tag representing the priority in which an information portion of a message marked with the first prioritization tag is to be transmitted, and
- a second prioritization tag representing the priority in which an information portion of a message marked with the first prioritization tag should be retained.

5. The node (10) as claimed in any preceding claim, wherein it comprises a bundle handling unit (105) configured to extract said priority tags from each incoming message.

6. The node (10) as claimed in any preceding claim, wherein said main ordering rule is defined from at least one of the priority tags associated with one or more data portions of each message.

7. The node (10) as claimed in any preceding claim, wherein the main storage unit (15) comprises at least one storage queue (150), the storage manager (50) comprising an auxiliary storage manager (502) configured to maintain a set of logical references to elements of said at least one storage queue (150) using said set of data structures (520), each entry of a data structure comprising a logical reference (501) to an object of a storage queue (150), the entries in each storage queue (150) referring to the logical references used in said auxiliary data structures (520).

8. The node (10) as claimed in claim 7, wherein the size of said at least one storage queue (150) is fixed or changed dynamically.

9. The node (10) as claimed in any preceding claim 7 or 8, wherein the auxiliary storage manager (502) is further configured to sort each auxiliary data structure (520) based on said at least one auxiliary ordering rule.

10. The node (10) as claimed in any preceding claim 7 to 9, wherein the auxiliary storage manager (52) is configured to sort the logical references in a j - th data structure among said data structures (520) by decreasing value of the i - th priority tag associated with the objects of the at least one storage queue (150), the number i representing the index of a given priority tag in the j - th data structure and depending on the number j representing the index of the data structure.

11. The node as claimed in claim 10, wherein the number i used to represent the index of a given priority tag in the j - th data structure is equal to the reference number j representing the index of the data structure.

12. The node as claimed in any preceding claim 7 to 11, wherein, in response to a change made to a storage queue (150), the auxiliary manager is configured to dynamically update the logical references in the data structures (520).

13. The node as claimed in claim 12, wherein, in response to a request for deletion of an object in a storage queue (150), the auxiliary manager is configured to look up each logical reference associated with said object in the auxiliary storage (52), to purge each found logical reference from the auxiliary storage and to purge the object from the storage queue (150).

14. The node as claimed in claim 13, wherein, in response to a request for insertion of an object in a storage queue (150), the auxiliary manager is configured to insert the object in the storage queue (150), and to add at least one pointer from logical references in the auxiliary storage unit (52) to the object.

15. The node as claimed in any preceding claim, wherein said at least one auxiliary ordering rules are different from one another and from the main ordering rule applied to the main storage unit (15).

16. A method of managing a node in a DTN-based communication system, said node being configured to store incoming messages in a main storage unit (15) in the form of objects and forward messages from the main storage unit (15) to other nodes of the network depending on forwarding conditions, one or more portions of the message being marked with a set of priority tags of given types, each tag being assigned a value, the method comprising managing the storage of messages in said main storage unit (15), by sorting the main storage unit (15) according to a main ordering rule being related to at least one priority tag, the node further comprising an auxiliary storage unit (52) comprising at least one auxiliary data structure (520), each data structure storing a logical reference to each object of the main storage unit (15), the method further comprising sorting each auxiliary data structure according to at least one auxiliary ordering rule related to at least one priority tag.

## Patentansprüche

1. Knoten in einem DTN-basierten Kommunikationssystem, wobei der Knoten dafür konfiguriert ist, eingehende Nachrichten in einer Hauptspeichereinheit (15) in Form von Objekten zu speichern und Nachrichten von der Hauptspeichereinheit (15) in Abhängigkeit von Weiterleitungsbedingungen an andere Knoten des Netzwerks weiterzuleiten, wobei ein oder mehrere Abschnitte der Nachricht mit einer Menge von Prioritätsetiketten gegebener Typen markiert sind, wobei jedem Etikett ein Wert zugewiesen ist, wobei der Knoten einen Speichermanager (50) zum Verwalten der Speicherung von Nachrichten in der Hauptspeichereinheit (15) umfasst, wobei der Speichermanager dafür konfiguriert ist, die Hauptspeichereinheit (15) gemäß einer Hauptordnungsregel zu sortieren, die sich auf mindestens ein Prioritätsetikett bezieht, worin der Knoten ferner eine Hilfsspeichereinheit (52) umfasst, die mindestens eine Hilfsdatenstruktur (520) umfasst, wobei jede Datenstruktur eine logische Referenz auf jedes Objekt der Hauptspeichereinheit (15) speichert, wobei die Hilfsspeichereinheit (52) ferner dafür konfiguriert ist, jede Hilfsdatenstruktur gemäß mindestens einer Hilfsordnungsregel zu sortieren, die sich auf mindestens ein Prioritätsetikett bezieht.

2. Knoten nach Anspruch 1, worin jedes Objekt der Hauptspeichereinheit (15) ferner eine logische Referenz zu jedem Element der Datenstruktur speichert.

3. Knoten nach einem der vorhergehenden Ansprüche, worin jede Nachricht (22) einen Kopf (201) und eine Nutzlast (202) umfasst, wobei der Kopf (201) der Nachricht die Menge von Prioritätsetiketten (30) umfasst, wobei jedes Prioritätsetikett einem in der Nutzlast (202) enthaltenen Datenabschnitt zugeordnet ist.

4. Knoten nach einem der vorhergehenden Ansprüche, worin die Prioritätsetiketten in einer Gruppe gewählt werden können, die aus Folgendem besteht:
- ein erstes Prioritisierungsetikett, das die Priorität darstellt, mit der ein Informationsabschnitt einer Nachricht, die mit dem ersten Prioritsierungsetikett markiert ist, übertragen werden soll, und
- ein zweites Prioritisierungsetikett, das die Priorität darstellt, mit der ein Informationsteil einer Nachricht, der mit dem ersten Prioritisierungsetikett markiert ist, aufbewahrt werden soll.

5. Knoten (10) nach einem der vorhergehenden Ansprüche, worin er eine Bündelverarbeitungseinheit (105) umfasst, die dafür konfiguriert ist, die Prioritätsetiketten aus jeder eingehenden Nachricht zu extrahieren.

6. Knoten (10) nach einem der vorhergehenden Ansprüche, worin die Hauptordnungsregel aus mindestens einem der Prioritätsetiketten definiert wird, die einem oder mehreren Datenabschnitten jeder Nachricht zugeordnet sind.

7. Knoten (10) nach einem der vorhergehenden Ansprüche, worin die Hauptspeichereinheit (15) mindestens eine Speicherwarteschlange (150) umfasst, wobei der Speichermanager (50) einen Hilfsspeichermanager (502) umfasst, der dafür konfiguriert ist, unter Verwendung der Menge von Datenstrukturen (520) eine Menge von logischen Referenzen auf Elemente der mindestens einen Speicherwarteschlange (150) zu führen, wobei jeder Eintrag einer Datenstruktur eine logische Referenz (501) auf ein Objekt einer Speicherwarteschlange (150) umfasst, wobei die Einträge in jeder Speicherwarteschlange (150) auf die logischen Referenzen verweisen, die in den Hilfsdatenstrukturen (520) verwendet werden.

8. Knoten (10) nach Anspruch 7, worin die Größe der mindestens einen Speicherwarteschlange (150) fest ist oder dynamisch geändert wird.

9. Knoten (10) nach Anspruch 7 oder 8, worin der Hilfsspeichermanager (502) ferner dafür konfiguriert ist, jede Hilfsdatenstruktur (520) auf der Grundlage der mindestens einen Hilfsordnungsregel zu sortieren.

10. Knoten (10) nach einem der vorhergehenden Ansprüche 7 bis 9, worin der Hilfsspeichermanager (52) dafür konfiguriert ist, die logischen Referenzen in einer j-ten Datenstruktur unter den Datenstrukturen (520) zu sortieren, und zwar nach abnehmendem Wert des i-ten Prioritätsetiketts, das den Objekten der mindestens einen Speicherwarteschlange (150) zugeordnet ist, wobei die Zahl i den Index eines gegebenen Prioritätsetiketts in der j-ten Datenstruktur darstellt und von der Zahl j abhängt, die den Index der Datenstruktur darstellt.

11. Knoten nach Anspruch 10, worin die Zahl i, die verwendet wird, um den Index eines gegebenen Prioritätsetiketts in der j-ten Datenstruktur darzustellen, gleich der Referenznummer j ist, die den Index der Datenstruktur darstellt.

12. Knoten nach einem der vorhergehenden Ansprüche 7 bis 11, worin der Hilfsmanager dafür konfiguriert ist, als Reaktion auf eine an einer Speicherwarteschlange (150) vorgenommene Änderung die logischen Referenzen in den Datenstrukturen (520) dynamisch zu aktualisieren.

13. Knoten nach Anspruch 12, worin der Hilfsmanager dafür konfiguriert ist, als Reaktion auf eine Anforderung zur Löschung eines Objekts in einer Speicherwarteschlange (150) jede logische Referenz nachzuschlagen, die dem Objekt im Hilfsspeicher (52) zugeordnet ist, jede gefundene logische Referenz aus dem Hilfsspeicher zu löschen und das Objekt aus der Speicherwarteschlange (150) zu löschen.

14. Knoten nach Anspruch 13, worin der Hilfsspeicher-Manager dafür konfiguriert ist, als Reaktion auf eine Anforderung zum Einfügen eines Objekts in eine Speicherwarteschlange (150) das Objekt in die Speicherwarteschlange (150) einzufügen und mindestens einen Zeiger von logischen Referenzen in der Hilfsspeichereinheit (52) auf das Objekt hinzuzufügen.

15. Knoten nach einem der vorhergehenden Ansprüche, worin die mindestens einen Hilfsordnungsregeln sich voneinander und von der auf die Hauptspeichereinheit (15) angewandten Hauptordnungsregel unterscheiden.

16. Verfahren zum Verwalten eines Knotens in einem DTN-basierten Kommunikationssystem, wobei der Knoten dafür konfiguriert ist, eingehende Nachrichten in einer Hauptspeichereinheit (15) in Form von Objekten zu speichern und Nachrichten von der Hauptspeichereinheit (15) in Abhängigkeit von Weiterleitungsbedingungen an andere Knoten des Netzwerks weiterzuleiten, wobei ein oder mehrere Abschnitte der Nachricht mit einer Menge von Prioritätsetiketten gegebener Typen markiert sind, wobei jedem Etikett ein Wert zugewiesen ist, wobei das Verfahren das Verwalten der Speicherung von Nachrichten in der Hauptspeichereinheit (15) umfasst, und zwar durch Sortieren der Hauptspeichereinheit (15) gemäß einer Hauptordnungsregel, die sich auf mindestens ein Prioritätsetikett bezieht, wobei der Knoten ferner eine Hilfsspeichereinheit (52) umfasst, die mindestens eine Hilfsdatenstruktur (520) umfasst, wobei jede Datenstruktur eine logische Referenz auf jedes Objekt der Hauptspeichereinheit (15) speichert, wobei das Verfahren ferner das Sortieren jeder Hilfsdatenstruktur gemäß mindestens einer Hilfsordnungsregel umfasst, die sich auf mindestens ein Prioritätsetikett bezieht.

## Revendications

1. Nœud dans un système de communication basé sur DTN, ledit nœud étant configuré pour stocker des messages entrants dans une unité de stockage principale (15) sous la forme d'objets et pour transférer des messages de l'unité de stockage principale (15) vers d'autres nœuds du réseau en fonction de conditions de transfert, une ou plusieurs partie(s) du message étant marquée(s) avec un ensemble d'indicateurs de priorité de types donnés, chaque indicateur se voyant attribuer une valeur, le nœud comprenant un gestionnaire de stockage (50) permettant de gérer le stockage de messages dans ladite unité de stockage principale (15), le gestionnaire de stockage étant configuré pour trier l'unité de stockage principale (15) selon une règle d'ordonnancement principale liée à au moins un indicateur de priorité, dans lequel le nœud comprend en outre une unité de stockage auxiliaire (52) comprenant au moins une structure de données auxiliaire (520), chaque structure de données stockant une référence logique à chaque objet de l'unité de stockage principale (15), l'unité de stockage auxiliaire (52) étant en outre configurée pour trier chaque structure de données auxiliaire selon au moins une règle d'ordonnancement auxiliaire relative à au moins un indicateur de priorité.

2. Nœud selon la revendication 1, dans lequel chaque objet de l'unité de stockage principale (15) stocke en outre une référence logique à chaque élément de la structure de données.

3. Nœud selon l'une quelconque des revendications précédentes, dans lequel chaque message (22) comprend une entête (201) et une charge utile (202), l'entête (201) du message comprenant ledit ensemble d'indicateurs de priorité (30), chaque indicateur de priorité étant associé à une partie des données comprises dans la charge utile (202).

4. Nœud selon l'une quelconque des revendications précédentes, dans lequel les indicateurs de priorité peuvent être choisis dans une groupe constitué :
- d'un premier indicateur de priorisation représentant la priorité selon laquelle une partie d'informations d'un message marqué avec le premier indicateur de priorisation doit être transmise, et
- un second indicateur de priorisation représentant la priorité selon laquelle une partie d'informations d'un message marqué avec le premier indicateur de priorisation doit être retenue.

5. Nœud (10) selon l'une quelconque des revendications précédentes, dans lequel il comprend une unité de traitement de faisceau (105) configurée pour extraire lesdits indicateurs de priorité de chaque message entrant.

6. Nœud (10) selon l'une quelconque des revendications précédentes, dans lequel ladite règle d'ordonnancement principale est définie à partir d'au moins un des indicateurs de priorité associés à une ou plusieurs partie(s) de données de chaque message.

7. Nœud (10) selon l'une quelconque des revendications précédentes, dans lequel l'unité de stockage principale (15) comprend au moins une file de stockage (150), le gestionnaire de stockage (50) comprenant un gestionnaire de stockage auxiliaire (502) configuré pour maintenir un ensemble de références logiques à des éléments de ladite au moins une file de stockage (150) en utilisant ledit ensemble de structures de données (520), chaque entrée d'une structure de données comprenant une référence logique (501) à un objet d'une file de stockage (150), les entrées dans chaque file de stockage (150) se référant aux références logiques utilisées dans lesdites structures de données auxiliaires (520).

8. Nœud (10) selon la revendication 7, dans lequel la taille de ladite au moins une file de stockage (150) est fixe ou changée de manière dynamique.

9. Nœud (10) selon l'une quelconque des revendications 7 ou 8 précédentes, dans lequel le gestionnaire de stockage auxiliaire (502) est en outre configuré pour trier chaque structure de données auxiliaire (520) sur la base de ladite au moins une règle d'ordonnancement auxiliaire.

10. Nœud (10) selon l'une quelconque des revendications 7 à 9 précédentes, dans lequel le gestionnaire de stockage auxiliaire (52) est configuré pour trier les références logiques dans une j^{ème} structure de données parmi lesdites structures de données (520) par valeur décroissante du i^{ème} indicateur de priorité associé aux objets de la au moins une file de stockage (150), le nombre i représentant l'indice d'un indicateur de priorité donné dans la j^{ème} structure de données et dépendant du nombre j représentant l'indice de la structure de données.

11. Nœud selon la revendication 10, dans lequel le nombre i utilisé pour représenter l'indice d'un indicateur de priorité donné dans la j^{ème} structure de données est égal au nombre de référence j représentant l'indice de la structure de données.

12. Nœud selon l'une quelconque des revendications 7 à 11 précédentes, dans lequel, en réponse à un changement apporté à une file de stockage (150), le gestionnaire auxiliaire est configuré pour mettre à jour de manière dynamique les références logiques dans les structures de données (520).

13. Nœud selon la revendication 12, dans lequel, en réponse à une demande de suppression d'un objet dans une file de stockage (150), le gestionnaire auxiliaire est configuré pour vérifier chaque référence logique associée audit objet dans le stockage auxiliaire (52), pour purger chaque référence logique trouvée du stockage auxiliaire et pour purger l'objet de la file de stockage (150).

14. Nœud selon la revendication 13, dans lequel, en réponse à une demande d'insertion d'un objet dans une file de stockage (150), le gestionnaire auxiliaire est configuré pour insérer l'objet dans la file de stockage (150) et pour ajouter au moins un pointeur de références logiques dans l'unité de stockage auxiliaire (52) à l'objet.

15. Nœud selon l'une quelconque des revendications précédentes, dans lequel lesdites au moins une règle d'ordonnancement auxiliaire sont différentes les unes des autres et de la règle d'ordonnancement principale appliquée à l'unité de stockage principale (15).

16. Procédé de gestion d'un nœud dans un système de communication basé sur DTN, ledit nœud étant configuré pour stocker des messages entrants dans une unité de stockage principale (15) sous la forme d'objets et pour transférer des messages de l'unité de stockage principale (15) vers d'autres nœuds du réseau en fonction de conditions de transfert, une ou plusieurs partie(s) du message étant marquée(s) avec un ensemble d'indicateurs de priorité de types donnés, chaque indicateur se voyant attribuer une valeur, le procédé comprenant la gestion du stockage de messages dans ladite unité de stockage principale (15), en triant l'unité de stockage principale (15) selon une règle d'ordonnancement principale liée à au moins un indicateur de priorité, le nœud comprenant en outre une unité de stockage auxiliaire (52) comprenant au moins une structure de données auxiliaire (520), chaque structure de données stockant une référence logique à chaque objet de l'unité de stockage principale (15), le procédé comprenant en outre le tri de chaque structure de données auxiliaire selon au moins une règle d'ordonnancement auxiliaire relative à au moins un indicateur de priorité.
